# EUROPÄISCHE PATENTSCHRIFT

(11) **EP 1 305 585 B1**
(45) Veröffentlichungstag und Bekanntmachung des Hinweises auf die Patenterteilung: **13.05.2009**
(21) Anmeldenummer: 01943401.8
(22) Anmeldetag: 18.05.2001
(51) Int. Cl.: G01L 9/00, G01L 7/08

(54) **KAPAZITIVER DRUCKSENSOR**
CAPACITIVE PRESSURE SENSOR
CAPTEUR DE PRESSION CAPACITIF

(30) Priorität: 26.07.2000 DE 10036433; 26.01.2001 US 264032 P
(43) Veröffentlichungstag der Anmeldung: 02.05.2003
(73) Patentinhaber: Endress + Hauser GmbH + Co. KG, 79689 Maulburg (DE)
(72) Erfinder: DREWES, Ulfert, 79379 Müllheim (DE); ROSSBERG, Andreas, 79713 Bad Säckingen (DE); HEGNER, Frank, 79540 Lörrach (DE); SCHMIDT, Elke, 79650 Schopfheim (DE); BREME, Jürgen, 66265 Heusweiler (DE); VELTEN, Thomas, 79664 Wehr (DE)
(74) Vertreter: Andres, Angelika Maria
(86) Internationale Anmeldenummer: PCT/EP2001/005695
(87) Internationale Veröffentlichungsnummer: WO 2002/008712

(56) Entgegenhaltungen:
- EP-A- 0 544 934
- GB-A- 2 124 770
- US-A- 4 405 970
- US-A- 5 381 299
- PATENT ABSTRACTS OF JAPAN vol. 008, no. 286 (P-324), 27. Dezember 1984 (1984-12-27) & JP 59 148843 A (MATSUSHITA DENKI SANGYO KK), 25. August 1984 (1984-08-25)

## Beschreibung

Die Erfindung betrifft einen kapazitiven Drucksensor.

Derartige Drucksensoren werden vielfach in der Prozeßautomation eingesetzt, um den Druck von unterschledlichen Prozeßmedien zu messen, die als Flüssigkeiten, Gase oder Dämpfe vorliegen können.

Im wesentlichen bestehen derartige Drucksensoren aus einem Grundkörper und einer Membran, welche beide vorzugsweise aus einem keramischen oder einkristallinen Material bestehen. Am Grundkörper ist eine flache Ausnehmung vorgesehen, die auch als Membranbett bezeichnet wird und die von der Membran vollständig überdeckt wird.

Das Membranbett und die Membran begrenzen eine Messkammer, die vom eigentlichen Prozeßmedium getrennt ist und die in der Regel mit Luft oder mit einem Silikonöl als Druckübertragungsmedium gefüllt ist. Die Druckkammer ist gas- bzw. flüssigkeitsdicht. Dies erfordert einen erheblichen Aufwand bei der Herstellung der Verbindung Membran Grundkörper.

Am Membranbett und der dem Membranbett zugewandten Unterseite der Membran sind jeweils Elektroden vorgesehen, die meist in Sputtertechnik, Aufdampfverfahren oder z. B. Im Siebdruckverfahren, wie z. B. in der US-A 50 50 035 beschrieben, aufgebracht werden. Diese beiden Elektroden bilden zusammen den eigentlichen Meßkondensator, dessen Meßsignal ausgewertet wird.

Wirkt auf die Membran ein Referenzdruck PR und ist dieser Druck unterschiedlich zu dem in der Druckkammer herrschenden Druck, so verformt sich die Membran elastisch. Dies führt zur Änderung des Abstandes der beiden Elektroden und damit zu einer Kapazitätsänderung des Meßkondensators. Die Kapazität des Meßkondensators ist ein Maß für die Druckdifferenz. Sie wird als Meßsignal mit Hilfe einer Auswerteelektronik, an die beide Elektroden angeschlossen sind, erfaßt und ausgewertet.

Man unterscheidet zwischen Drucksensoren für Relativdruck, Absolutdruck und Differenzdruck, je nachdem welcher Referenzdruck in der Druckkammer bzw. an der Membranaußeneeite vorliegt.

Meist spricht man einfach nur vom Druck, der gemessen wird und nicht von der Druckdifferenz, wie es eigentlich zutreffend wäre.

Neben einfachen Drucksensoren sind auch sogenannte Differenzdrucksensoren bekannt, die die Differenz zweier Prozeßdrücke erfassen. Derartige Differenzdrucksensoren bestehen z. B. aus zwei solchen beschriebenen Drucksensoren mit dem Unterschied, daß sie einen gemeinsamen Grundkörper aufwelsen. Die Meßkammern befinden sich an den gegenüberilegenden Seiten des Grundkörpers. Sie sind durch einen Verbindungskanal, der dem Druckausgleich dient, miteinander verbunden.

Bei einem weiteren Differenzdrucksensor sind in einem Grundkörper zwei Messkammem durch eine gemeinsame Membran voneinander getrennt.

In beiden Fällen ist jeweils die Druckdifferenz der an den beiden Seiten des Grundkörpers herrschenden Prozeßdrücke die Interessierende Meßgröße.

Membran und Grundkörper sind über eine Fügung miteinander verbunden. Bei einem keramischen Sensor kann die Fügung z.B. mittels Aktivlot oder einer Glasfritte erfolgen. Bei einem Sensor aus monokristallinem Material kann z. Bsp. eutektisches Bonden, anodlsches Bonden oder Fusion Bonden als Fügetechnik verwendet werden.

An der Fügestelle werden Membran, Grundkörper sowie die Fügestelle selbst durch eine Spannungskonzentration infolge von Kerbspannungen sehr stark belastet, wenn in einer der Meßkammern oder auch in beiden Meßkammern ein hoher Druck herrscht. Im Extremfall kann es zur Rißbildung in der Membran oder in dem Grundkörper oder zu einem Auseinanderreißen der Verbindung Membran-Grundkörper kommen, was zu einem Ausfall des Drucksensors führt.

Die Patentanmeldung GB 2 124 770 A offenbart einen kapazitiven Differenzdrucksensor mit keramischen zwei keramische Grundkörpern und einer keramischen Messmembran die zwischen den beiden Grundkörpern unter Bildung zweier druckdichter Kammern eingeklebt ist. Die Grundkörper welsen Jeweils einen ringförmigen Graben auf, welcher der Messmembran zugewandt ist. In den Gräben münden jeweils eine Bohrung für eine elektrische Kontaktierung einer Elektrode und eine Bohrung zur Druckbeaufschlagung der Kammern.

JP 591 488 43 (A) offenbart einen elektrostatischen kapazitiven Drucksensor mit einem keramischen Grundkörper und einer keramischen Messmembran. Der Grundkörper weist eine kreissegmentförmige Vertiefung auf, die eine zentrale Elektrode begrenzt. Die zentrale Elektrode wird über einen Steg kontaktiert, der sich vom Rand des Grundkörpers zur Elektrode erstreckt. Die Messmembran mit einer ist parallel zur zentralen Elektrode positioniert und weist eine dieser gegenüberliegende Elektrode auf, wobei der Abstand zwischen beiden Elektroden mittels einer Glasfügestelle definiert wird, welche entlang des Randes des Grundkörpers verläuft, und welche die Membran druckdicht mit dem Grundkörper verbindet.

US 4,405,970 und US 5,381,299 offenbaren jeweils kapazitive Drucksensoren mit Si-Komponenten die mit Glasfügestellen verbunden sind.

EP 0544934 (A1) offenbart ein Verfahren zum stabilisieren der Öberflächeneigenschaften von in Vakuum temperaturzubehandelnden Gegenständen. Der kapazitive Drucksensor hat eine Membran in Form einer kreisrunden Scheibe mit planparallelen Flächen, die rings um den Umfang mit einem kreisrunden Grundkörper in einem definierten Abstand zusammengefügt ist, so dass zwischen der Oberseite des Grundkörpers und der gegenüberliegenden Fläche der Membran eine Kammer gebildet ist. Der Grundkörper und die Membran werden mittels eines ringförmigen Formteils aus Aktivhartlot in Hochvakuum verlötet.

Aus der US 5620054 ist ein Drucksensor bekannt, bei dem zur Verringerung der Belastung der Fügestelle, die Wandung im Bereich der Fügestelle verbreltert wird, Diese Maßnahme ist herstellungstechnisch sehr aufwendig. Außerdem verringert sich die Steifigkeit der an die Fügestelle angrenzenden Bereiche der Keramik. Dadurch wird nur die Spannung unmittelbar an der Fügestelle verringert. Das Spannungsmaximum befindet sich trotzdem weiterhin im Bereich der Fügestelle.

Aufgabe der Erfindung ist es, einen Drucksensor zu schaffen, der die infolge von Kerbspannungen an der Fügestellenwurzel entstehenden Spannungskonzentrationen in don Grundkörper verlagert, da die Verbindung Membran-Grundkörper meistens schwächer ist als das Bulk-Material des Grundkörpers. Eine weitere Aufgabe der Erfindung ist es, nicht nur den Ort der Spannungskonzentration zu verlagern, sondern die maximalen Spannungen zu reduzieren. Außerdem soll der Drucksensor einfach und kostengünstig herstellbar sein.

Gelöst wird diese Aufgabe durch einen Drucksensor gemäß Patentanspruch 1.

Durch die Nut werden Spannungskonzentrationen im Bereich der Fügung verringert.

Vorteilhafte Weiterentwicklungen der Erfindung sind in den abhängigen Ansprüchen angegeben.

Die nachfolgenden Ausführungen gelten für kapazitive Drucksensoren und kapazitive Differenzdrucksensoren entsprechend, so daß der Einfachheit halber nur noch kapazitive Drucksensoren behandelt werden.

Nachfolgend ist die Erfindung anhand eines in der Zeichnung dargestellten Ausführungsbeispiels näher beschrieben. Es zeigen:
Fig. 1 schematische Aufsicht dreier kapazitiver Drucksensoren,
Fig. 2 Ausschnittvergrößerung A gemäß Fig. 1 gemäß einem ersten Ausführungsbeispiel
Fig. 3 Ausschnittvergrößerung A gemäß Fig. 1 gemäß einem zweiten Ausführungsbeispiel
Fig. 4 Ausschnittvergrößerung A gemäß Fig. 1 gemäß einem dritten Ausführungsbeispiel.

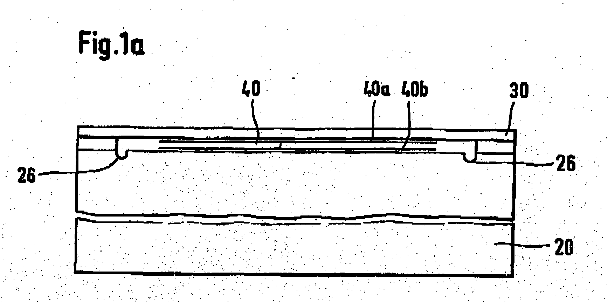

In Fig. 1a ist ein erster kapazitiver Drucksensor 10 in Aufsicht dargestellt, der im wesentlichen aus einem zylinderförmigen Grundkörper 20 und einer kreisförmigen Membran 30 besteht. Die Membran 30, die eine Druckkammer 40 überdeckt, ist mit dem Grundkörper 20 verbunden. Die Verbindung zwischen der Unterseite 32 der Membran 30 und dem Grundkörper 20 erfolgt entlang einer Fügung F,

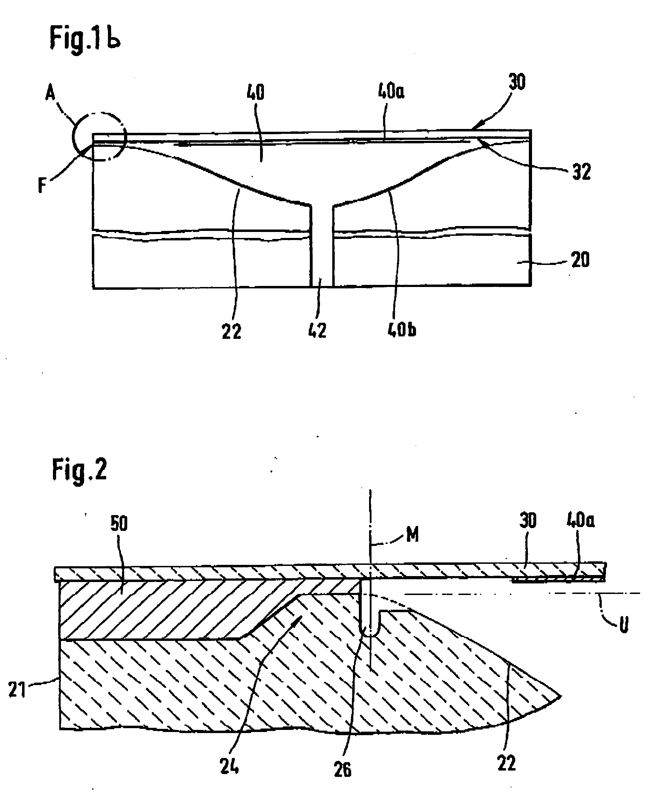

In Fig. 1b ist ein dritter kapazitiver Drucksensor 10 in Aufsicht dargestellt, der im wesentlichen aus einem zylinderförmigen Grundkörper 20 und einer kreisförmigen Membran 30 besteht. Die Membran 30, die ein am Grundkörper vorgesehenes Membranbett 22 überdeckt, ist mit dem Grundkörper 20 verbunden. Die Verbindung zwischen der Unterseite 32 der Membran 30 und dem Grundkörper 20 erfolgt entlang einer Fügung F.

Grundkörper 20 und Membran 30 bestehen aus einem spröden keramischen Material, Aluminiumoxid-Keramik (Fig. 1a, Fig. 1c).

Als gas- und flüssigkeitsdichte Fügung ist bei Keramik eine Aktivhartiotverbindung vergesehen, die unter Vakuum bei ca. 900 C hergestellt wird. Im verbundenen Zustand begrenzen die Membran 30 und der Grundkörper 20 eine Druckkammer 40, die entweder mit Luft oder mit einer nahezu Inkompressiblen Flüssigkeit z. B. einem Sliikonöl gefüllt ist. In der Druckkammer 40 herrscht Im unbelasteten Zustand der Referenzdruck PR. Die Druckkammer 40 wird über einen Kanal 42 mit Druck beaufschlagt.

Auf der Unterseite 32 der Membran 30 ist eine erste Elektrode 40a aufgebracht. Eine zweite Elektrode 40b ist auf das Membranbett 22 aufgebracht. Das Aufbringen kann z. B. durch Sputtern, Aufdampfen oder in Siebdrucktechnik erfolgen. Die zweite Elektrode 40b überdeckt im wesentlichen die konkave Zentralfläche 60. Sie muß diese aber nicht notwendigerweise vollständig überdecken.

Die beiden sich gegenüberliegenden Elektroden 40a, 40b bilden einen Meßkondensator, dessen Kapazität vom herrschenden Prozeßdruck P abhängt. Die Schichtdicken der Elektroden 40a bzw. 40b sind zur Verdeutlichung übertrieben stark dargestellt. Die Elektroden 40a, 40b sind über nicht näher dargestellte Anschlußleitungen mit einer ebenfalls nicht dargestellten Auswerteelektronik verbunden.

Die Auswerteelektronik für das Meßsignals das Meßkorrdensators Ist Stand der Technik. Die Auswerteelektronik, die nicht Gegenstand dieser Erfindung ist, ist deshalb nicht beschrieben.

Fig. 2 zeigt eine Ausschnittvergrößerung im Bereich der Fügung F gemäß einem ersten Ausführungsbeispiel. Unmittelbar an das Ende der Fügestelle (Fügestellenwurzel) schließt sich eine Nut 26 an. Die Nut 26 ist im dargestellten Ausführungsbeispiel etwa 1 mm breit und 1 mm tief.

Die Fügung des keramischen Sensors besteht aus einer Aktivhartiotverbindung 50. Im Bereich des Steges 24 ist der Abstand Membran 30 und Grundkörper 20 am geringsten.

Dies bedeutet auch, daß hier die Aktivhartioverbindung extrem dünn ist

Das Membranbett 22 wird geschliffen und ist nur wenig Mikrometer tief. Mit U ist die äußere Umfängslinie des Membranbetts 22 bezeichnet. Sie verläuft parallel zur Membran 30. Im dargestellten Fall steht die Mittellinie M der Nut 26 senkrecht auf die Umfangslinie U. Die In Fig. 2 dargesteilte Nut läßt sich leicht in Keramik einpressen und kann daher praktisch kostenlos beim Pressen der Keramik-Grundkörper hergesteilt werden.

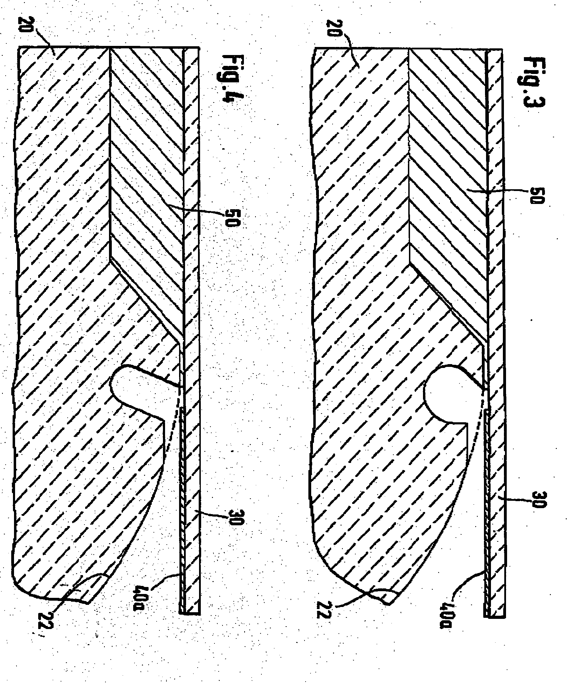

In den Figuren 3 bis 5 sind weitere bevorzugte Ausführungsbelspiele der Erfindung dargestellt, die sich nur in der jeweiligen Form der Nut 26 unterscheiden.

Fig. 3 und Fig. 4 zeigen Nuten mit bauchigen bzw. länglichen Querschnitt, die nachträglich in einen gepreßten Keramik-Grünling eingearbeitet werden kann. Dies Nuten sind daher kostenintensiver als die in Fig. 1 gezeigte Nut, lösen aber die gestellte Aufgabe besser als die Nut aus Fig. 2 wie Simulationen nach der Finite-Elemente Methode zeigen.

Nachfolgend ist die Funktion der Erfindung anhand eines Drucksensors mit Membranbett näher erläutert.
Das sich in der Druckkammer 40 befindliche Fluid wird über den Kanal 42 mit Druck beaufschlagt. Dadurch steigt der Druck in der Druckkammer 40 an. Bei wachsendem Druck P wird sich die Membran 30 nach außen ausbeulen. Dadurch entstehen erhebliche Spannungen im Grundkörper, in der Membran sowie im Bereich der Fügung F vorzugsweise an der Fugestellenwurzel. Diese Spannungen werden jedoch durch die Nut 26 von der Fügestelle weg In Richtung des Inneren des Grundkörpers 20 abgeleitet. Die Fügung, welche oft einer geringeren Belastung standhält als der Grundkörpers, wird dadurch entlastet. Außerdom worden durch die in den Figuren 2, 3, 4, 5 dargestellten Nuten Spannungsspitzen abgebaut. Das heißt die Spannungen werden über einen größeren Bereich verteilt.

Weiterhin wird durch den in der Druckkammer herrschenden Druck P der äußere Rand der Nut in Richtung Rand 21 gedrückt, dadurch wird die Membran 30 etwas gespannt.

Dieser Effekt läßt sich insbesondere bei Differenzdrucksensoren wirkungsvoll einsetzen. Da bei zwei Kammern Differenzdrucksensoren durch den in den Druckkammern herrschenden Druck die Membran im Bereich der Umfangelinie U gestaucht wird, was gerade zu einer Verringerung der Spannung in der Membran 30 führt. Diese beiden gegenläufigen Effekte können in ihrer Stärke so gewählt werden, daß sie sich gerade kompensieren. In diesem Fall ist die Membran 30 bei jedern Nenndruck P spannungsfrei. Der Nenndruck hat dann keinen Einfluß mehr auf die Sensorempfindlichkeit.

## Patentansprüche

1. Drucksensor mit
einem Grundkörper (20) aus einer Aluminiumoxidkeramik;
einer Membran (30) aus einer Aluminiumoxidkeramik;
wobei die Membran mit dem Grundkörper (20) über eine Fügung verbunden ist, die eine Aktivhartiotverbindung aufweist; und
einem Messkondensator zur Erzeugung eines Messsignals mit einer ersten und zweiten Elektrode (40a, 40b), die jeweils einander gegenüberliegend am Grundkörper (20) bzw. an der Unterseite (32) der Membran (30) aufgebracht sind,
**dadurch gekennzeichnet, dass** sich unmittelbar an das Ende der Fügung im Grundkörper (20) eine Nut (26) zum Messkondensator hin anschließt, um Spannungskonzentrationen im Bereich der Fügung zu verringern.

2. Drucksensor nach Anspruch 1, **dadurch gekennzeichnet, dass** die Nut (26) einen bauchigen Querschnitt aufweist.

3. Drucksensor nach Anspruch 1, **dadurch gekennzeichnet, dass** die Nut (26) einen länglichen Querschnitt aufweist.

4. Drucksensor nach Anspruch 1, **dadurch gekennzeichnet, dass** die Nut (26) einen kreisförmigen Querschnitt aufweist.

5. Drucksensor nach einem der vorhergehenden Ansprüche, **dadurch gekennzeichnet, dass** der Grundkörper (20) ein Membranbett (22) aufweist.

## Claims

1. Pressure sensor with:
a meter body (20) made of aluminum oxide ceramic;
a diaphragm (20) made of aluminum oxide ceramic;
whereby the diaphragm is connected to the meter body (20) by means of a joint that exhibits an active brazing joint;
a precision capacitor for generating a measuring signal with a first and second electrode (40a, 40b) which are fitted opposite one another on the meter body (20) or on the underside of the diaphragm (30),
**characterized in that** a groove (26) to the precision capacitor is located at the end of the joint in the meter body (20) to reduce stress concentrations in the area of the joint.

2. Pressure sensor as per Claim 1, **characterized in that** the groove (26) exhibits a bellied cross-section.

3. Pressure sensor as per Claim 1, **characterized in that** the groove (26) exhibits an elongated cross-section.

4. Pressure sensor as per Claim 1, **characterized in that** the groove (26) exhibits a circular cross-section.

5. Pressure sensor as per one of the previous claims, **characterized in that** the meter body (20) exhibits a diaphragm bed (22).

## Revendications

1. Capteur de pression comprenant
un corps de base (20) constitué d'une céramique d'alumine ;
une membrane (30) constituée d'une céramique d'alumine ;
la membrane étant reliée avec le corps de base (20) par l'intermédiaire d'un joint réalisé au moyen d'un métal d'apport actif dur ; et
un condensateur de mesure destiné à la génération d'un signal de mesure, composé d'une première et d'une deuxième électrode (40a, 40b), qui sont disposées l'une en face de l'autre, respectivement sur le corps de base (20) et sur la partie inférieure (32) de la membrane (30),
**caractérisé en ce qu'**une rainure (26) s'étendant jusqu'au condensateur de mesure est réalisée dans le corps de base (20), directement à l'extrémité du joint, afin de réduire les concentrations de tension dans la zone du joint.

2. Capteur de pression selon la revendication 1, **caractérisé en ce que** la rainure (26) présente une section bombée.

3. Capteur de pression selon la revendication 1, **caractérisé en ce que** la rainure (26) présente une section oblongue.

4. Capteur de pression selon la revendication 1**, caractérisé en ce que** la rainure (26) présente une section circulaire.

5. Capteur de pression selon l'une des revendications précédentes, **caractérisé en ce que** le corps de base (20) comporte un lit de membrane (22).
